Europäisches Patentamt

European Patent Office

Office européen des brevets

(11) Publication number: **0 372 653**
**A1**

# EUROPEAN PATENT APPLICATION

(21) Application number: **89203082.6**

(22) Date of filing: **06.12.89**

(51) Int. Cl.⁵: **H02J 7/00**

(30) Priority: **07.12.88 NL 8803006**

(43) Date of publication of application:
**13.06.90 Bulletin 90/24**

(84) Designated Contracting States:
**BE DE FR GB IT NL**

(71) Applicant: **JOVER PRODUCTS B.V.**
**Kruisboog 17**
**NL-3905 TE Veenendaal(NL)**

(72) Inventor: **Kelzer, Hendrikus Cornelis**
**Van Zuilenlaan 35**
**NL-3829 AP Hooglanderveen(NL)**

(74) Representative: **de Wit, Gerard Frederik, Ir. et**
**al**
**Octrooi- en Merkenbureau De Wit B.V.**
**Breitnerlaan 146**
**NL-2596 HG Den Haag(NL)**

(54) **Device for loading an auxiliary battery.**

(57) A device for connecting a vehicle's battery (1),
which is connected to a generator coupled to the
motor of the vehicle with an auxiliary battery (4),
which device is provided with sensing means
(7,8,11,21) to sense the voltage of the battery and to
activate a switching means (6,C) to connect the
combination with the auxiliary battery, when the
sensed voltage is higher than a predetermined value,
the connection to the auxiliary battery containing a
dc-dc converter, said sensing means preferably hav-
ing a delay means (16,17) to prevent disconnection
of the switching means before the laps of a predeter-
mined time period of preferably a few minutes.

EP 0 372 653 A1

## Device for loading an auxiliary battery

The invention relates to a device for loading an auxiliary battery from the battery of a motor-vehicle, which battery is connected with an electric generator coupled to the motor of said vehicle, provided with voltage sensing means controlling switching means to connect the said battery with the auxiliary battery if the voltage delivered by the battery is greater than a first predetermined voltage value.

Such a device is known from "FUNKSCHAU" vol. 57, no. 24, november 1985 "Duo Power im Auto". Apart from protecting against a too low voltage of the battery a security to protect against dangerous high currents in case a very low voltage condition of the auxiliary battery consists in preventing loading of the auxiliary battery, even if the vehicle is travelling. This is an important disadvantage, because the auxiliary battery has to be charged in a separate charging apparatus.

A further disadvantage is, that in case of appreciable resistance values of the conductors between the battery and the auxiliary battery (as is normally the case if the auxiliary battery is located in a towed vehicle, such as a caravan) only very small charging currents, if any, are possible if both batteries have the same nominal voltage.

The invention aims to eliminate these draw backs.

Accordingly the invention provides that in the connection of the battery with the auxiliary battery a dc-dc converter is interposed.

It is remarked that FR-A 2 271 691 shows a circuit fed by a battery-generator combination of a vehicle, in which a hand switch may connect a secondary circuit containing non essential power consumers, a voltage controlled switch controlled by the voltage value of the combination disrupting the connection in case the voltage fed to the secondary circuit is below a predetermined value. This circuit does not reload an auxiliary battery, but if it had such a battery it could not safely reload it.

Further European Patent Application EP-A-0 246 976 shows an electrical circuit for a vehicle, in which the battery and its normal utilisation circuit are separated from the generator, which is then switched on a higher voltage and connected to a load needing that higher voltage. This circuit is quite different from the invention, especially because the higher voltage may only be generated during the rather short time period in which the battery can serve the vehicle when it is not reloaded.

A dc-dc converter, often called a chopper, will limit the current it takes from the battery and also the current delivered to the auxiliary battery, so that the danger of excessive currents is eliminated and nevertheless a deeply discharged auxiliary battery can be reloaded by the normal generator and/or battery of the vehicle.

A limited time period during which the sensed voltage is below the first predetermined value cannot do great harm, because excessive current values are inhibited. This means, that a short stall period of the motor or a short period in which the sensed voltage is below the first predetermined voltage value, is allowed, for instance when driving the vehicle away. On the other hand a long discharging period with a too low sensed voltage may deteriorate the vehicle's battery. This situation may occur if a considerable power consumption is switched on in the vehicle and/or the auxiliary battery is rather deeply discharged and/or a further power consumer is branched off from the conductor leading to the dc-dc converter. All these situations become still more serious if the motor cuts out.

According to a further elaboration of the invention these difficulties are overcome without unnecessary disruption of the connection with the dc-dc converter by the feature of claim 2.

A practical and reliable realisation hereof can be obtained by using the features of claim 3.

In order to prevent closing of the connection if only during a very short period the sensed voltage is above the first predetermined voltage value, which may be due to disturbances, preferably the features of claim 4 are incorporated. This may also be useful to make sure that the auxiliary battery is not loaded when the motor is started.

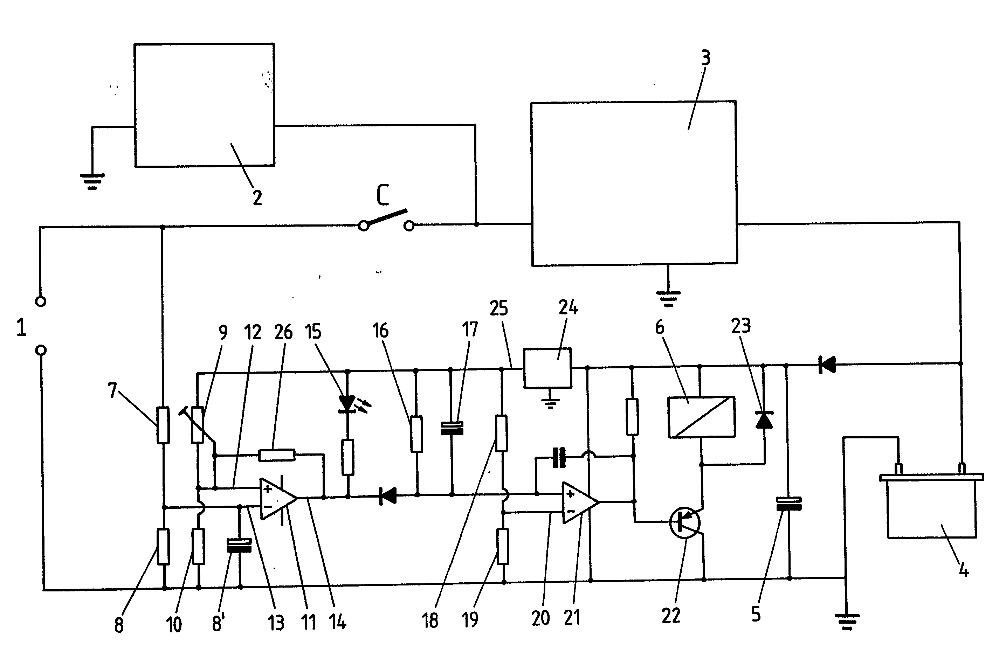

These and further features and advantages of the invention are in the following elucidated on hand of the drawing, in which a scheme of a switching device according to the invention has been shown.

To the circuit shown in the drawing at 1 the battery voltage of the vehicle's battery is fed, which via a contact C of a relay 6 further to be discussed connects a circuit which in the shown embodiment contains a load 2, such as a refrigerator and via a dc-dc converter 3 is connected to the positive terminal of an auxiliary battery 4, the other terminal of which is connected to earth.

Over the voltage fed in at reference 1 lies a voltage divider consisting of two resistors 7, 8 the interconnection point of which is connected to the -input 13 of a comparator 11. A voltage divider consisting of a potentiometer 9 and a resistor 10 feeds a fraction which is determined by the adjustment of the potentiometer of a standard voltage further to be elucidated to the +input 12 of the comparator 11. The output 14 of the comparator 11 is connected to a LED 15 provided with a series resistance, which lights up when a predetermined voltage limit is trespassed. A resistance 16 and capacity 17 form a delay circuit with a long delay time, preferably a few minutes.

A second comparator 21 receives on its +input the voltage of output 14 of the comparator 11 and on its -input a voltage derived from a voltage divider 18 and 19. The output of the comparator controls via a switching transistor 22 the activation of the coil 6 of a relais controlling the contact C. A diode 23 is active to divert voltage peaks occurring when the relay is switched off.

24 indicates a standard voltage cell known per se, which outputs a standardized voltage on output line 25. Part of this voltage is fed to the +input of the comparator 11 by means of voltage divider 9, 10.

If now the voltage on battery terminal 1 rises so far that the voltage on the -input 13 of the comparator becomes greater than that on the +input 12 the comparator is reversed and its output 14 goes from high to low.

This voltage change causes via feed-back resistance 26 a lowering of the +input 12 of the comparator 11. This means that the voltage on the -input 13 has to lower with this voltage difference before the comparator 11 is reversed again and its output 14 becomes high. The output 14 is connected to the +input of the second comparator 21, the -input of which is connected to a voltage divider 18, 19, which receives as feeding voltage the standard voltage outputted by unit 24. The voltage lowering on the +input causes the output of comparator 21 to reverse, by reason of which the switching transistor 22 conducts, so that contact C is closed.

Reference is made of the delay network 8, 8' at the -input of the comparator 11, which network inhibits, that peaks or disturbances, if any, in the voltage fed to 1 lead to immediate energizing of relay 6 and consequently closing of contact C.

The delay circuit 16, 17 becomes active when, due to a voltage decrease on terminal 1, the comparator 11 switches back by reason of which its output 14 becomes low again. This hardly has any influence until capacitor 17 has been discharged via resistance 16. This may last some minutes. However, when this has happened the comparator 21 reverses and transistor 22 is not conducting any more, after which relay 6 drops out and contact C opens.

The dc-dc converter indicated with 3 and for instance known per se contains a so-called chopper feeding a self-induction, whereby with disruption of the circuit of the self-induction a voltage surge occurs which is fed to the output 3. Such a dc-dc converter generally is provided with a pulse width modulation commodity to determine the proportion of the period of taking current and the period in which this does not happen, wherewith a feed back sees to it that always the desired voltage is obtained. This results in the possibility to supply the battery 4 always with the voltage suitable for loading it in spite of voltage loss, if any, in the conductors connecting 1 to the battery of the vehicle.

Reference 2 indicates a load which with modern caravans mostly is a refrigerator. Such a refrigerator forms a considerable load, which would exhaust the battery rather soon in case no current supply from the generator occurs. However, by the safeguard of the invention it is possible to supply such a relatively heavy load when travelling, it being pointed to it that during travel a refrigerator, which can be switched on gas or electricity may not work on gas. If for instance the battery voltage of the motor vehicle is 12,3 Volt and this voltage rises with starting the motor to for instance 14,7 Volt, a considerable current can be drawn by reason of which the voltage decreases to for instance 12,3 Volt. Because immediately after change of the voltage of output 14 another adjustment voltage for the voltage difference between the inputs of comparator 11 has been obtained, this needs not to do any harm and contact C remains closed. When then the motor of the vehicle is switched off and the voltage decreases so far that comparator 11 does switch back, then relay 6 drops out again after exhaustion of the delay circuit 16, 17. The LED 15 can be used as an adjustment means to be clearly aware whether output 14 is high or low.

The embodiment of the invention shown in the drawing has the advantage, that the energy for energizing relay 6 is delivered by the auxiliary battery. This means that in case this battery voltage is not present, for instance because the battery is defect or even lacks no load current can be supplied. If this case occurs it will be noticed immedidately, so that all desired measures can be taken.

## Claims

1. Device for loading an auxiliary battery (4) from the battery (1) of a motor-vehicle, which battery is connected with an electric generator coupled to the motor of said vehicle, provided with voltage sensing means (7,8,11,21) controlling switching means (6,C) to connect the said battery with the auxiliary battery if the voltage delivered by the battery is greater than a first predetermined voltage value, characterized in that in the connection of the battery with the auxiliary battery a dc - dc converter (3) is interposed.

2. Device according to claim 1, characterized in that the voltage sensing means (7,8,11,21) cooperate with means (9,10) for sensing whether the voltage delivered by the battery is lower than a second predetermined voltage (on 9,10), which is lower than the first one (on 7,8) and in that timing means (16,17) are present to allow the switching means (6) to interrupt the said connection only when the said voltage delivered by the battery was below said second predetermined voltage during a time period determined by the said timing means (16,17).

3. Device according to claim 2, characterized in that the voltage sensing means are provided with a comparator (21) to compare a voltage derived from said voltage delivered by the battery with a first standard voltage (from 24) and switching means (9,10,26,11) to compare the said derived voltage with a second lower voltage.

4. Device according to any of the preceding claims, characterized in that the voltage sensing means is provided with a delay circuit (8,8') delaying activation of the switching means with a second predetermined time period during which the voltage delivered by the battery is greater than said first predetermined voltage.

5. Device according to claim 4, characterized in that the switching means (9,10,26,11) contains a comparator (11) with two inputs, the first of which is connected to a voltage divider receiving the voltage of the battery and the second of which is connected to a second voltage divider (9,10) receiving a standard voltage the output of the comparator having a first voltage level when the first input is higher than the second one and a second voltage level in the reverse case, which output controls the switching means (6,C) and is connected (via 26) to the second voltage divider in order to lower the voltage derived from it, such that with activated switching means a lower voltage of the battery causes interruption of the switching means.

6. Device according to any of the preceding claims having an important user of electrical energy, characterized in that said user (2) is connected in parallel with the dc-dc converter (3).

7. Device according to any of the preceding claims, characterized in that the switching means (6,C) are fed by the auxiliary battery.

P 13.610

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,D | FUNKSCHAU. vol. 57, no. 24, November 1985, MUNCHEN DE pages 80 - 82; JENS WITTJE: "Duo-Power im Auto" * the whole document * | 1, 6 | H02J7/00 |
| Y | WO-A-8403595 (AYR PTY. LTD.) * page 6, line 1 - page 8, line 15; figure 1 * | 1, 6 | |
| A,D | FR-A-2271691 (SOCIETA ITALIANA VETRO SIV) * page 3, line 20 - page 4, line 23; figures 1-4 * | 1 | |
| A | FR-A-2207375 (THE LUCAS ELECTRICAL COMPANY LTD.) * page 6, lines 10 - 30; figures 1, 2 * | 2, 4 | |
| A,D | EP-A-0246976 (DUCELLIER ET CIE) * column 5, lines 2 - 24; figure 2 * | 2, 5 | |

TECHNICAL FIELDS SEARCHED (Int. Cl.5 )

H02J

The present search report has been drawn up for all claims

| Place of search | Date of completion of the search | Examiner |
|---|---|---|
| THE HAGUE | 27 FEBRUARY 1990 | GOETZ P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P0401)